# EUROPEAN PATENT SPECIFICATION

(11) **EP 3 210 405 B1**
(45) Date of publication and mention of the grant of the patent: **14.08.2019**
(21) Application number: 14786673.5
(22) Date of filing: 21.10.2014
(51) Int. Cl.: H04W 16/14

(54) **RESOURCE ALLOCATION**
RESSOURCENZUWEISUNG
AFFECTATION DE RESSOURCES

(43) Date of publication of application: 30.08.2017
(73) Proprietor: Nokia Solutions and Networks Oy, 02610 Espoo (FI)
(72) Inventor: TENG, Yong, Beijing 100192 (CN); HORNEMAN, Kari Veikko, 90800 Oulu (FI); YU, Ling, 90650 Oulu (FI); VAN PHAN, Vinh, 90100 Oulu (FI)
(74) Representative: Nokia EPO representatives
(86) International application number: PCT/EP2014/072511
(87) International publication number: WO 2016/062332

(56) References cited:
- EP-A1- 1 220 557
- US-A1- 2013 079 009
- WANG YUANJIE ET AL: "Inter-operator spectrum sharing strategy for local area indoor dense deployment scenario", 2014 IEEE/CIC INTERNATIONAL CONFERENCE ON COMMUNICATIONS IN CHINA (ICCC), IEEE, 13 October 2014 (2014-10-13), pages 64-69, XP032721757, DOI: 10.1109/ICCCHINA.2014.7008244 [retrieved on 2015-01-12]
- TENG YONG ET AL: "Co-primary spectrum sharing for denser networks in local area", 2014 9TH INTERNATIONAL CONFERENCE ON COGNITIVE RADIO ORIENTED WIRELESS NETWORKS AND COMMUNICATIONS (CROWNCOM), ICST, 2 June 2014 (2014-06-02), pages 120-124, XP032616139, [retrieved on 2014-07-07]

## Description

### Field

The invention relates to communications.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Co-primary spectrum sharing refers to a spectrum access model where two or more primary license holders (typically of the same radio service) agree on joint use of their licensed spectrum or parts of it.

Another example of spectrum sharing is an access model wherein a regulator allocates a part of a spectrum not exclusively to a single operator but jointly to several potential users (operators) with the obligation to use it collectively subject to certain rules.

EP 1 220 557 A1 describes a method for dynamic inter-operator communication resource sharing.

### Summary

The invention is defined in the independent claims. Additional features of the invention are provided in the dependent claims. The embodiments and/ or examples disclosed in the following description which are not covered by the appended claims are considered as not being part of the present invention.

According to an aspect of the present invention, there is provided an apparatus comprising: at least one processor and at least one memory including a computer program code, the at least one memory and the computer program code configured to, with the at least one processor, cause the apparatus at least to: define a need for frequency resources for communications; obtain, from at least one other node, information indicating at least one releasable frequency resource and at least one rule associated with the at least one releasable frequency resource the at least one rule defining reallocation principles; compare the need for frequency resources with currently allocated frequency resources and if the need for the frequency resources for the communications is not met, select at least one resource from the at least one releasable frequency resource according to the at least one rule.

According to an aspect of the present invention, there is provided an apparatus comprising: at least one processor and at least one memory including a computer program code, the at least one memory and the computer program code configured to, with the at least one processor, cause the apparatus at least to: compare the need for frequency resources with currently allocated frequency resources, if the need for need for frequency resources, and at least one rule associated with the at least one releasable frequency resource the at least one rule defining reallocation principles.

According to yet another aspect of the present invention, there is provided a method comprising: defining a need for frequency resources for communications; obtaining, from at least one other node, information indicating at least one releasable frequency resource and at least one rule associated with the at least one releasable frequency resource the at least one rule defining reallocation principles; comparing the need for frequency resources with currently allocated frequency resources and if the need for the frequency resources for the communications is not met, selecting at least one resource from the at least one releasable frequency resource according to the at least one rule.

According to yet another aspect of the present invention, there is provided a method comprising: comparing the need for frequency resources with currently allocated frequency resources, if the need for frequency resources is less than the currently allocated frequency resources, informing at least one other node about at least one releasable frequency resource, the at least one releasable frequency resource comprising at least one frequency resource exceeding the need for frequency resources, and at least one rule associated with the at least one releasable frequency resource the at least one rule defining reallocation principles.

According to yet another aspect of the present invention, there is provided an apparatus comprising: means for defining a need for frequency resources for communications; means for obtaining, from at least one other node, information indicating at least one releasable frequency resource and at least one rule associated with the at least one releasable frequency resource the at least one rule defining reallocation principles; means for comparing the need for frequency resources with currently allocated frequency resources and means for selecting at least one resource from the at least one releasable frequency resource according to the at least one rule, if the need for the frequency resources for the communications is not met.

According to yet another aspect of the present invention, there is provided an apparatus comprising: means for comparing the need for frequency resources with currently allocated frequency resources, and means for informing at least one other node about at least one releasable frequency resource, the at least one releasable frequency resource comprising at least one frequency resource exceeding the need for frequency resources, and at least one rule associated with the at least one releasable frequency resource the at least one rule defining reallocation principles, if the need for frequency resources is less than the currently allocated frequency resources.

According to yet another aspect of the present invention, there is provided a computer program, comprising program code portions for controlling executing of a process, the process comprising: defining a need for frequency resources for communications; obtaining, from at least one other node, information indicating at least one releasable frequency resource and at least one rule associated with the at least one releasable frequency resource the at least one rule defining reallocation principles; comparing the need for frequency resources with currently allocated frequency resources and if the need for the frequency resources for the communications is not met, selecting at least one frequency resources is less than the currently allocated frequency resources, inform at least one other node about at least one releasable frequency resource, the at least one releasable frequency resource comprising at least one frequency resource exceeding the resource from the at least one releasable frequency resource according to the at least one rule.

According to yet another aspect of the present invention, there is provided a computer program, comprising program code portions for controlling executing of a process, the process comprising: informing at least one other node about at least one releasable frequency resource, the at least one releasable frequency resource comprising at least one frequency resource exceeding the need for frequency resources, and at least one rule associated with the at least one releasable frequency resource the at least one rule defining reallocation principles.

### List of drawings

Some embodiments of the present invention are described below, by way of example only, with reference to the accompanying drawings, in which
- Figure 1: illustrates an example of a system;
- Figure 2: is a flow chart;
- Figure 3: is another flow chart;
- Figures 4A and 4B: depict examples of a staged procedure, and
- Figure 5: illustrates examples of apparatuses.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

Embodiments are applicable to any user device, such as a user terminal, as well as to any network element, relay node, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are 5G, the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

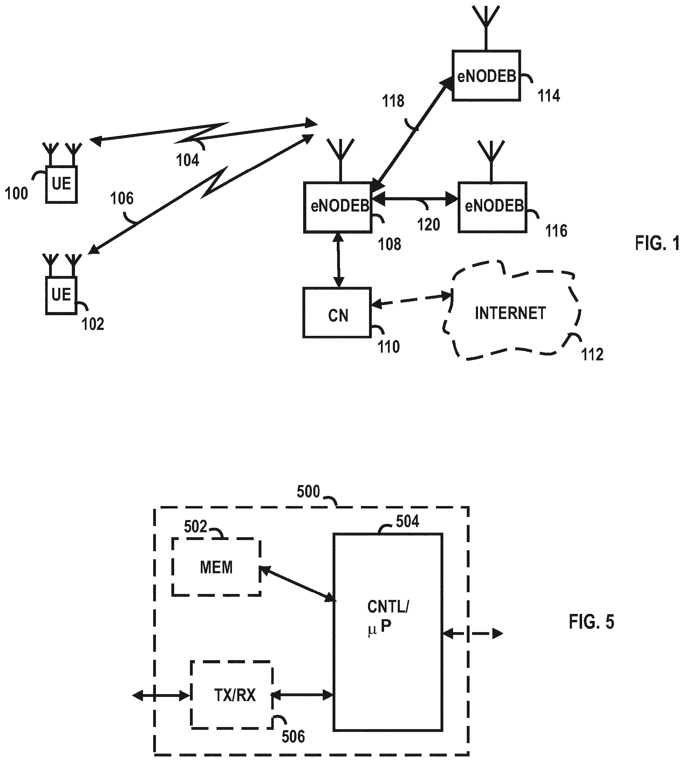

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties. Another example of a suitable communications system is the 5G concept. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a part of a radio access network based on E-UTRA, LTE, LTE-Advanced (LTE-A) or LTE/EPC (EPC = evolved packet core, EPC is enhancement of packet switched technology to cope with faster data rates and growth of Internet protocol traffic). E-UTRA is an air interface of LTE Release 8 (UTRA= UMTS terrestrial radio access, UMTS= universal mobile telecommunications system). Some advantages obtainable by LTE (or E-UTRA) are a possibility to use plug and play devices, and Frequency Division Duplex (FDD) and Time Division Duplex (TDD) in the same platform.

Figure 1 shows user devices 100 and 102 configured to be in a wireless connection on one or more communication channels 104 and 106 in a cell with a (e)NodeB 108 providing the cell. The physical link from a user device to a (e)NodeB is called uplink or reverse link and the physical link from the (e)NodeB to the user device is called downlink or forward link.

Two other nodes (eNodeBs) are also provided, namely 114 and 116 which may have communications channels 118 and 120 to eNode B 108. The nodes may belong to the network of a same operator or to the networks of different operators. It should be appreciated that the number of nodes may vary, as well as the number of networks. User devices communicating with nodes 114 and 116 are not shown due to the sake of clarity. The nodes may have connections to other networks, as well.

The NodeB, or advanced evolved node B (eNodeB, eNB) in LTE-Advanced, is a computing device configured to control the radio resources of communication system it is coupled to. The (e)NodeB may also be referred to as a base station, an access point or any other type of interfacing device including a relay station capable of operating in a wireless environment.

The (e)NodeB includes or is coupled to transceivers. From the transceivers of the (e)NodeB, a connection is provided to an antenna unit that establishes bi-directional radio links to user devices. The antenna unit may comprise a plurality of antennas or antenna elements. The (e)NodeB is further connected to core network 110 (CN). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

A communications system typically comprises more than one (e)NodeB in which case the (e)NodeBs may also be configured to communicate with one another over links, wired or wireless, designed for the purpose. These links may be used for signalling purposes.

The communication system is also able to communicate with other networks, such as a public switched telephone network or the Internet 112. The communication network may also be able to support the usage of cloud services. It should be appreciated that (e)NodeBs or their functionalities may be implemented by using any node, host, server or access point etc. entity suitable for such a usage.

The communication system may also comprise a central control entity, or a like, providing facilities for networks of different operators to cooperate for example in spectrum sharing.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network.

The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

It is obvious for a person skilled in the art that the depicted system is only an example of a part of a radio access system and in practise, the system may comprise a plurality of (e)NodeBs, the user device may have an access to a plurality of radio cells and the system may comprise also other apparatuses, such as physical layer relay nodes or other network elements, etc. At least one of the NodeBs or eNodeBs may be a Home(e)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto- or picocells. The (e)NodeBs of Figure 1 may provide any kind of these cells. A cellular radio system may be implemented as a multilayer network including several kinds of cells. Typically, in multilayer networks, one node B provides one kind of a cell or cells, and thus a plurality of (e) Node Bs are required to provide such a network structure.

Recently for fulfilling the need for improving the deployment and performance of communication systems, the concept of "plug-and-play" (e)NodeBs has been introduced. Typically, a network which is able to use "plug-and-play" (e)Node Bs, includes, in addition to Home (e)NodeBs (H(e)nodeBs), a home node B gateway, or HNB-GW (not shown in Figure 1). A HNB Gateway (HNB-GW), which is typically installed within an operator's network may aggregate traffic from a large number of HNBs back to a core network.

Demand for radio spectrum is increasing and thus frequency bands are becoming more and more congested. Diverse approaches to share frequencies for making spectrum usage more effective have been discussed. One example is co-primary spectrum sharing which refers to a spectrum access model where two or more primary license holders (typically of the same radio service) agree on joint use of their licensed spectrum or parts of it.

Another example of spectrum sharing is an access model wherein a regulator allocates a part of a spectrum not exclusively to a single operator but jointly to several potential users (operators) with the obligation to use it collectively subject to certain rules.

Co-primary spectrum sharing is thought to be the next step after authorized shared access (ASA) spectrum sharing concept, which is in the promotion phase among key players of telecommunication regulation, standardization and industry. The co-primary spectrum sharing will provide more dynamic spectrum sharing between operators providing the same radio services, whereas ASA is targeted to spectrum sharing with incumbent users. The largest benefit from the co-primary spectrum sharing is assumed to be achieved when traffic profiles of different networks are different and dynamically varying.

In the following, embodiments suitable for resource allocation/reallocation utilising or in the context of spectrum sharing are discussed in further detail.

Typically, users are allocated resources for starting a communications and during the communications, a need for resources may change, for example, sending a text message, like tweet, needs less resources than loading a video clip. Therefore, resource need may vary during time. Another example is a change in network topology, that is to say, when a node is not available any more (powered off) or when a new node appears (powered on). For effective resource usage, resource allocation should be adapted to a current need and/or supply. In spectrum sharing, different cells share at least part of an allocable frequency band and therefore the share of each cell should be adaptable.

Spectrum sharing may be based on a centralized scenario, wherein spectrum sharing control is performed by a centralized controlling entity or on a distributed scenario, wherein the spectrum sharing control is distributed among access nodes, or on a hybrid scenario, which is a combination of two first ones. Following embodiments are disclosed in the context of a distributed scenario without limiting the embodiments to such a scenario, though. At least some spectrum sharing control functions may be carried out in a centralized fashion even not specifically presented so.

It should be appreciated that the coding of software for carrying out the embodiments shown and described below is well within the scope of a person of ordinary skill in the art.

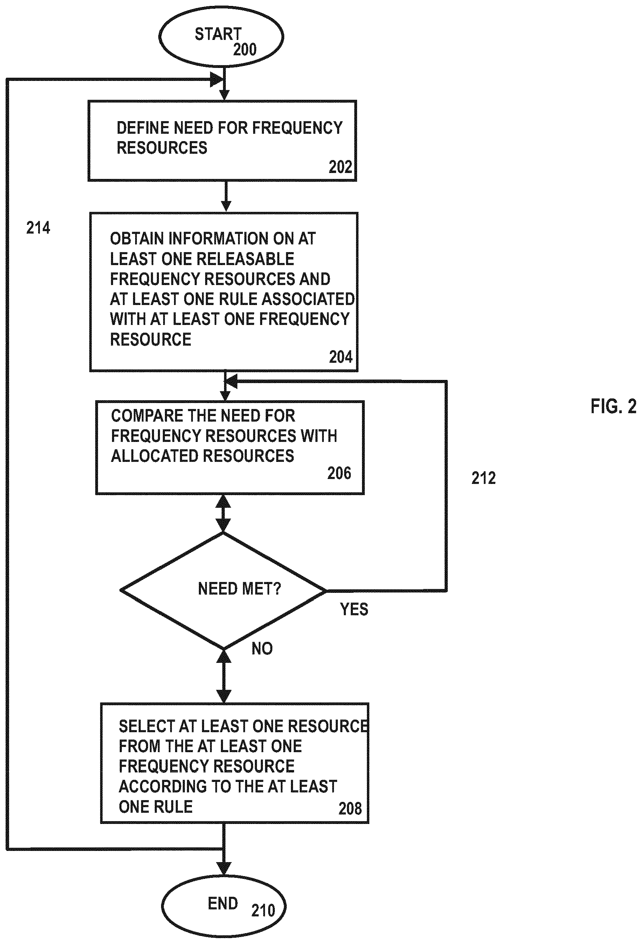

One embodiment starts in block 200 of Figure 2. This embodiment discusses about shared spectrum resource allocation/reallocation from the point of view of a user having an increasing resource need.

In block 202, a need for frequency resources for communications is defined.

A node analyses future or current resource needs. As discussed above, resource needs may vary. The analysis may be based on users' resource needs they have been announced to the node serving them. The resource needs may be announced in the form of a resource request message or as a response to resource enquiry. Another option is that the analysis may be based on the number of users served, service profiles of the users (such as data rate, Quality of Service), etc.

Defining may be carried out whenever needed, or it may be carried out as a part of a resource reallocation procedure. In the case the reallocation procedure is adapted, it is beneficial to synchronize this in order cells participating to this reallocation procedure carries out defining their resource needs simultaneously for the resource needs to be known not only cell-specifically, but among the cells. One option to obtain this synchronization is to use a staged reallocation procedure which is predefined (defined by a central control entity, for example) or defined and informed when triggered (defined by a node, for example) and possibly also launched by the central control entity or triggered by a change in network topology or resource demand in an automated-fashion, for example. In the staged approach or procedure, a stage comprising the defining phase may be used. The stage typically has a defined duration for the synchronization purposes. The stage may be a separate stage or a part of some other stage, such as the stage discussed in block 204. Some more detailed examples of the staged procedure will be discussed later.

In block 204, information indicating at least one releasable frequency resource and at least one rule associated with the at least one releasable frequency resource the at least one rule defining reallocation principles is obtained from at least one other node.

Usually each cell has a traffic demand of its own, which it compares to the allocable resources, such as component carriers. If a finite amount of frequency resources are provided, some of the cells may be lacking of frequency resources to satisfy a traffic demand, hence a gap (an amount of a need for additional frequency resources) between the demand and resources may exist. The gap could be depicted, for instance, by (M-N)/N, where M is the number of component carriers demanded, N is the number of component carriers allocated. Additionally, the history of resource usage may also be taken into account, e.g. W^{∗}(M-N)/N where W is a weight factor which is proportional to the time a cell in question has increased/decreased the number of component carriers used.

On the other hand, some cells may have extra resources after the initial allocation or after last reallocation, compared with its traffic demand.

Alternatively, the maximum of resources a cell can utilize permanently or for a specified period of time may be defined. If the number of component carriers exceeds the threshold, the cell has to announce a resource release to allow others to use component carriers exceeding the maximum. It should be appreciated that a cell which announced this kind of a forced release may also broadcast its gap in the next allocation round to participate in the possible resource sharing for a coming period.

Cells having extra resources after the initial allocation or after last reallocation, compared with their current traffic demands may inform, for instance by broadcasting, an announcement of resource release. The nodes having releasable resources may also inform at least one rule for resource reallocation. The at least one rule may for instance include that the node having the largest gap will be prioritized; a cell will not take a released resource before its neighbours with larger gaps have announced not to take it. There may also be a rule defining that only one unit of resources (e.g. component carrier) could be selected in one go or at one time. There may also be a rule defining that certain units of resources could be selected only to satisfy certain gaps of traffic demand, application or Quality of Service (QoS) classes i.e. certain amount of gap in traffic demand could correspond to or be quantized to a certain amount of resources. Additionally, a rule defining a timer which determines when a node may repeat a resource selection may also exist. The value of the timer may depend on the priority order of the nodes. The rule may also inform the number of rounds (or in the staged procedure, stages) when resources can be selected.

In the staged procedure, this stage may be called a release (R) stage. In R slot, nodes having releasable resources indicate a release announcement and the rules for reallocation.

Additionally, each cell may broadcast information on its gap size. The gap may be different among cells and the cells could be arranged in an order according on the gap size for the adjustment of the frequency resources. The arranging may be carried out autonomously at each node based on information obtained on neighbours' gaps.

In the staged procedure, the gaps size may be informed as a part of release stage or in an additional stage (G).

In one embodiment, timing information on the duration of each phase or stage is obtained for example by receiving broadcast information from a central control entity and/or from a node informing releasable resources. For instance, the procedure may be launched by the central control entity and then the further steps are synchronized by the node informing releasable resources. Another example is that the whole process is timed by the node informing releasable resources. Other options also exist, such as the duration of each step is defined in advance and only the starting time of the procedure is announced.

In blocks 206 and 208, the need for frequency resources with currently allocated frequency resources is compared and if the need for the frequency resources for communications is not met (not enough resources), at least one resource from the at least one releasable frequency resource according to the at least one rule is selected.

Cells lacking frequency resources may select new resources among resources released or to be released by cells with extra resources. The selection of the resources will follow the rules (defined in the R or G stage according to the staged example) using the information broadcast on the gap sizes and releasable resources.

If the node with the highest priority is not using its opportunity to select a releasable resource, the node with a second highest priority may select the resource, etc. A node may announce taking the resource or not taking the resource in its turn. This may go on until all releasable resources are selected. The right to select a resource may be dropped in the priority order in one round or stage or it may be carried out in consecutive rounds or stages depending on the time needed: if there are a plenty of releasable resources or plenty of cells involved, the time reserved for the selection phase may not be enough, but one or more additional slots or stages may be needed. The node releasing the resources may be responsible for controlling the releasing/selection phase and inform the number of slots or stages. In the staged procedure, the selection stage may be called Increase (I) stage.

It is assumed that the nodes carry out the procedure autonomously according to the rules and information broadcast between stages. The information exchange is typically local, so only neighbouring nodes may receive the information. A node may belong to several local regions or groups of nodes.

It should be understood that the number of stages may vary independently of each other, that is to say there may be several R stages and only one I stage, or vice versa. Also the number of G stages may vary from zero to many consecutive G stages.

In the examples above, the stages are described by names release, gap and increase and abbreviations R, G and I, but the names and abbreviations are only used for the sake of clarity and they should not be taken as limitations.

The embodiment ends in block 210. The embodiment is repeatable in many ways. A couple of examples are shown by arrows 212 and 214 in Figure 2. It should be understood that the embodiment may be repeated one or more times with a constant or variable pause between separate rounds.

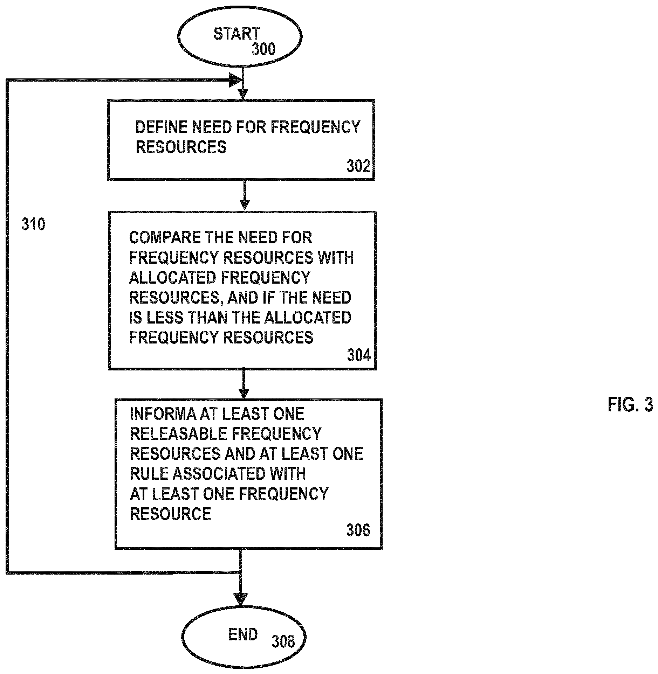

Another embodiment starts in block 300 of Figure 3. This embodiment discusses about shared spectrum resource allocation from the point of view of a user having a decreasing resource need.

In block 302, a need for frequency resources for communications is defined.

In this phase, a node analyses future or current resource needs. As discussed above, resource needs may vary. The analysis may be based on users' resource needs they have announced to the node. The resource needs may be announced in the form of a resource request message or as a response to resource enquiry. Another option is that the analysis may be based on the number of users served, service profiles of the users (such as data rate, Quality of Service), etc.

Defining may be carried out whenever needed, or it may be carried out as a part of a resource reallocation procedure. In the case the reallocation procedure is adapted, it is beneficial to synchronize this in order cells participating to this reallocation procedure carries out defining their resource needs simultaneously for the resource needs to be known not only cell-specifically, but among the cells. One option to obtain this synchronization is to use a staged reallocation procedure which is predefined (defined by a central control entity, for example) or defined and informed when triggered (defined by a node, for example) and possibly also launched by the central control entity or triggered by a change in network topology or resource demand in an automated-fashion, for example. In the staged approach or procedure, a stage comprising the defining phase may be used. The stage typically has a defined duration for the synchronization purposes. The stage may be a separate stage or a part of some other stage, such as the stage discussed in block 304. Some more detailed examples of the staged procedure will be discussed later.

In blocks 304 and 306, the need for frequency resources is compared with currently allocated frequency resources and if the need for frequency resources is less than the currently allocated frequency resources, at least one other node is informed about at least one releasable frequency resource, the at least one releasable frequency resource comprising at least one frequency resource exceeding the need for frequency resources, and at least one rule associated with the at least one releasable frequency resource the at least one rule defining reallocation principles.

Usually each cell has a traffic demand of its own, which it compares to the allocable resources, such as component carriers. If a finite amount of frequency resources are provided, some of the cells may be lacking of frequency resources to satisfy a traffic demand, hence a gap (an amount of a need for additional frequency resources) between the demand and resources may exist. The gap could be depicted, for instance, by (M-N)/N, where M is the number of component carriers demanded, N is the number of component carriers allocated. Additionally, the history of resource usage may also be taken into account, e.g. W^{∗}(M-N)/N where W is a weight factor which is proportional to the time a cell in question has increased/decreased the number of component carriers used.

On the other hand, some cells may have extra resources after the initial allocation or after last reallocation, compared with its traffic demand.

Alternatively, the maximum of resources a cell can utilize permanently or for a specified period of time may be defined. If the number of component carriers exceeds the threshold, the cell has to announce a resource release to allow others to use component carriers exceeding the maximum. It should be appreciated that a cell which announced this kind of a forced release may also broadcast its gap in the next allocation round to participate in the possible resource sharing for a coming period.

Cells having extra resources after the initial allocation or after last reallocation, compared with their current traffic demands may inform, for instance by broadcasting, an announcement of resource release. The nodes having releasable resources may also inform at least one rule for resource reallocation. The at least one rule may for instance include that the node having the largest gap will be prioritized; a cell will not take a released resource before its neighbours with larger gaps have announced not to take it. There may also be a rule defining that only one unit of resources (e.g. component carrier) could be selected in one go or at one time. There may also be a rule defining that certain units of resources could be selected only to satisfy certain gaps of traffic demand, application or Quality of Service (QoS) classes i.e. certain amount of gap in traffic demand could correspond to or be quantized to a certain amount of resources. Additionally, a rule defining a timer which determines when a node may repeat a resource selection may also exist. The value of the timer may depend on the priority order of the nodes. The rule may also inform the number of rounds (or in the staged procedure, stages) when resources can be selected.

In the staged procedure, this stage may be called a release (R) stage. In R slot, nodes having releasable resources indicate a release announcement and the rules for reallocation.

Additionally, each cell may broadcast information on its gap size. The gap may be different among cells and the cells could be arranged in an order according on the gap size for the adjustment of the frequency resources. The arranging may be carried out autonomously at each node based on information obtained on neighbours' gaps.

In the staged procedure, the gaps size may be informed as a part of release stage or in an additional stage (G).

In one embodiment, timing information on the duration of each phase or stage is obtained for example by receiving broadcast information from a central control entity and/or from a node informing releasable resources. For instance, the procedure may be launched by the central control entity and then the further steps are synchronized by the node informing releasable resources. Another example is that the whole process is timed by the node informing releasable resources. Other options also exist, such as the duration of each step is defined in advance and only the starting time of the procedure is announced.

Cells lacking frequency resources may select new resources among resources released or to be released by cells with extra resources. The selection of the resources will follow the rules (defined in the R or G stage according to the staged example) using the information broadcast on the gap sizes and releasable resources.

If the node with the highest priority is not using its opportunity to select a releasable resource, the node with a second highest priority may select the resource, etc. A node may announce taking the resource or not taking the resource in its turn. This may go on until all releasable resources are selected. The right to select a resource may be dropped in the priority order in one round or stage or it may be carried out in consecutive rounds or stages depending on the time needed: if there are a plenty of releasable resources or plenty of cells involved, the time reserved for the selection phase may not be enough, but one or more additional slots or stages may be needed. The node releasing the resources may be responsible for controlling the releasing/selection phase and inform the number of slots or stages. In the staged procedure, the selection stage may be called Increase (I) stage.

It is assumed that the nodes carry out the procedure autonomously according to the rules and information broadcast between stages. The information exchange is typically local, so only neighbouring nodes may receive the information. A node may belong to several local regions or groups of nodes
It should be understood that the number of stages may vary independently of each other, that is to say there may be several R stages and only one I stage, or vice versa. Also the number of G stages may vary from zero to many consecutive G stages.

In the examples above, the stages are described by names release, gap and increase and abbreviations R, G and I, but the names and abbreviations are only used for the sake of clarity and they should not be taken as limitations.

The embodiment ends in block 308. The embodiment is repeatable in many ways. An example is shown by arrow 310 in Figure 3. It should be understood that the embodiment may be repeated one or more times with a constant or variable pause between separate rounds.

It should be understood that a same node may carry out in one round the procedure of obtaining more resources and in another round the procedure of releasing extra resources depending on its current need.

Embodiments above are basically considered in an intra-operator case, i.e. nodes above are within one operator's network. Taking into account multi-operator networks, some of the stages or phases may be dedicated for inter-operator resource release and resource increase, one or more additional stages or phases may be provided or a two-phase procedure may be applied: first information is exchanged between cells on a resource gap, traffic demand, extra resources, etc. Then, when reallocation takes place that is releasing resources, increasing resources, etc., it may be a multi-operator operation. In this case a spectrum controller or cell head may request from nodes it serves whether extra resources exists, if so, the network operated by another operator has a possibility to request for these resources. In other words, information on resource gaps or releasable resources may come from one or more nodes belonging to a network of one or more other operators directly from these nodes or indirectly via a controlling entity. Thus, information may also be exchanged between different networks in addition to nodes within one network. The information exchanged between different networks may differ from that exchanged between nodes, for instance a gap may be a total gap for the network at issue.

The steps/points, signaling messages and related functions described above in Figures 2 and 3 are in no absolute chronological order, and some of the steps/points may be performed simultaneously or in an order differing from the given one. Other functions may also be executed between the steps/points or within the steps/points and other signaling messages sent between the illustrated messages. Some of the steps/points or part of the steps/points can also be left out or replaced by a corresponding step/point or part of the step/point.

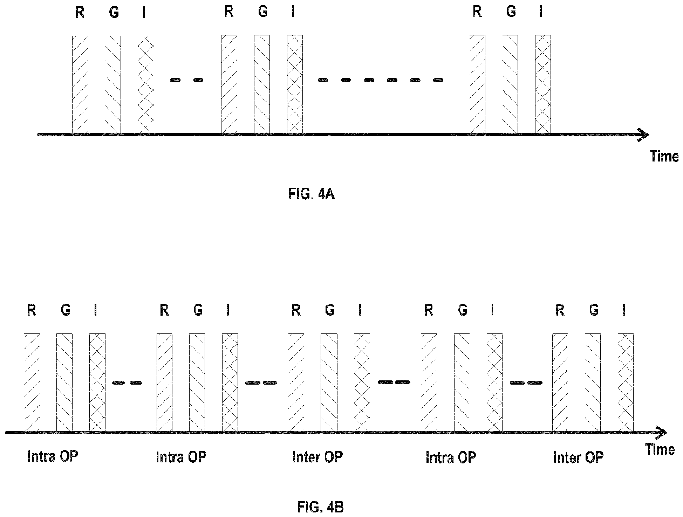

It should be understood that conveying, broadcasting, signalling transmitting and/or receiving may herein mean preparing a data conveyance, broadcast, transmission and/or reception, preparing a message to be conveyed, broadcasted, signalled, transmitted and/or received, or physical transmission and/or reception itself, etc. on a case by case basis. The same principle may be applied to terms transmission and reception as well. Some examples clarifying examples of a staged procedure are now discussed by means of Figures 4A and 4B. The stages are described by abbreviations R, G and I as in examples above, but the names and abbreviations are only used for the sake of clarity and they should not be taken as limitations.

Figure 4A shows an example of repeating R-G-I stages as time passes. This shows how the exemplifying procedure may be repeated as many times as resource reallocation is needed. As presented above, the number of stages inside one run may also vary, thus the pattern may also be R-I, RR-G-I, RR-II, etc.

Figure 4B shows an example of a multi-operator case. There it is shown, how some rounds are dedicated to inter-operator reallocation and some to intra-operator reallocation. As presented above, the number of stages inside one run may also vary, thus the pattern may also be R-I, RR-G-I, RR-II, etc. Additionally, the number of rounds dedicated to intra-operator reallocation or to inter-operator allocation, may also vary, and either of them may be given more reallocation rounds than the other.

An embodiment provides an apparatus which may be a node, host or server or any other suitable apparatus capable to carry out processes described above in relation to Figure 2 and/or 3.

It should be appreciated that the apparatus may include or otherwise be in communication with a control unit, one or more processors or other entities capable of carrying out operations according to the embodiments described by means of Figure 2 and/or 3. It should be understood that each block of the flowchart of Figure 2 and/or 3 and any combination thereof may be implemented by various means or their combinations, such as hardware, software, firmware, one or more processors and/or circuitry.

Figure 5 illustrates a simplified block diagram of an apparatus according to an embodiment in relation to Figure 2 and/or 3.

As an example of an apparatus according to an embodiment, it is shown apparatus 500, such as a node (eNodeB, for example), including facilities in control unit 504 (including one or more processors, for example) to carry out functions of embodiments according to Figure 2 and/or 3. The facilities may be software, hardware or combinations thereof as described in further detail below.

In Figure 5, block 506 includes parts/units/modules needed for reception and transmission, usually called a radio front end, RF-parts, radio parts, remote radio head, etc. The parts/units/modules needed for reception and transmission may be comprised in the apparatus or they may be located outside the apparatus the apparatus being operationally coupled to them. The apparatus may also include or be coupled to one or more internal or external memory units.

Another example of apparatus 500 may include at least one processor 504 and at least one memory 502 including a computer program code, the at least one memory and the computer program code configured to, with the at least one processor, cause the apparatus at least to: define a need for frequency resources for communications, obtain, from at least one other node, information indicating at least one releasable frequency resource and at least one rule associated with the at least one releasable frequency resource the at least one rule defining reallocation principles, compare the need for frequency resources with currently allocated frequency resources and if the need for the frequency resources for the communications is not met, select at least one resource from the at least one releasable frequency resource according to the at least one rule; and/or compare the need for frequency resources with currently allocated frequency resources, if the need for frequency resources is less than the currently allocated frequency resources, inform at least one other node about at least one releasable frequency resource, the at least one releasable frequency resource comprising at least one frequency resource exceeding the need for frequency resources, and at least one rule associated with the at least one releasable frequency resource the at least one rule defining reallocation principles.

It should be understood that the apparatus may include or be coupled to other units or modules etc., such as radio parts or radio heads, used in or for transmission and/or reception. This is depicted in Figure 5 as optional block 506.

Yet another example of an apparatus comprises means 504 for defining a need for frequency resources for communications, means 504 (506) for obtaining, from at least one other node, information indicating at least one releasable frequency resource and at least one rule associated with the at least one releasable frequency resource the at least one rule defining reallocation principles, means 504 for comparing the need for frequency resources with currently allocated frequency resources and means 504 for selecting at least one resource from the at least one releasable frequency resource according to the at least one rule if the need for the frequency resources for the communications is not met; and/or means 504 for comparing the need for frequency resources with currently allocated frequency resources and means 504 (506) for informing at least one other node about at least one releasable frequency resource if the need for frequency resources is less than the currently allocated frequency resources, the at least one releasable frequency resource comprising at least one frequency resource exceeding the need for frequency resources, and at least one rule associated with the at least one releasable frequency resource the at least one rule defining reallocation principles.

It should be understood that the apparatus may include or be coupled to other units or modules etc., such as radio parts or radio heads, used in or for transmission and/or reception. This is depicted in Figure 5 as optional block 506.

Although the apparatuses have been depicted as one entity in Figure 5, different modules and memory may be implemented in one or more physical or logical entities.

An apparatus may in general include at least one processor, controller or a unit or module designed for carrying out functions of embodiments operationally coupled to at least one memory unit (or service) and to typically various interfaces. Further, the memory units may include volatile and/or non-volatile memory. The memory unit may store computer program code and/or operating systems, information, data, content or the like for the processor to perform operations according to embodiments described above in relation to Figures 2, 3, 4A and/or 4B. Each of the memory units may be a random access memory, hard drive, etc. The memory units may be at least partly removable and/or detachably operationally coupled to the apparatus. The memory may be of any type suitable for the current technical environment and it may be implemented using any suitable data storage technology, such as semiconductor-based technology, flash memory, magnetic and/or optical memory devices. The memory may be fixed or removable.

The apparatus may be, include or be associated with at least one software application, module, unit or entity configured as arithmetic operation, or as a program (including an added or updated software routine), executed by at least one operation processor. Programs, also called program products or computer programs, including software routines, applets and macros, may be stored in any apparatus-readable data storage medium and they include program instructions to perform particular tasks. The data storage medium may be a non-transitory medium. The computer program or computer program product may also be loaded to the apparatus. A computer program product may comprise one or more computer-executable components which, when the program is run, for example by one or more processors possibly also utilizing an internal or external memory, are configured to carry out any of the embodiments or combinations thereof described above by means of Figures 2, 3, 4A and 4B. The one or more computer-executable components may be at least one software code or portions thereof. Computer programs may be coded by a programming language or a low-level programming language.

Modifications and configurations required for implementing functionality of an embodiment may be performed as routines, which may be implemented as added or updated software routines, application circuits (ASIC) and/or programmable circuits. Further, software routines may be downloaded into an apparatus. The apparatus, such as a node device, or a corresponding component, may be configured as a computer or a microprocessor, such as single-chip computer element, or as a chipset, including at least a memory for providing storage capacity used for arithmetic operation and an operation processor for executing the arithmetic operation.

Embodiments provide computer programs embodied on a distribution medium, comprising program instructions which, when loaded into electronic apparatuses, constitute the apparatuses as explained above. The distribution medium may be a non-transitory medium.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, digitally enhanced circuits, other electronic units designed to perform the functions described herein, or a combination thereof. For firmware or software, the implementation may be carried out through modules of at least one chip set (e.g., procedures, functions, and so on) that perform the functions described herein. The software codes may be stored in a memory unit and executed by processors. The memory unit may be implemented within the processor or externally to the processor. In the latter case it may be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art. It will be obvious to a person skilled in the art that, as technology advances, the inventive concept may be implemented in various ways. The invention and its embodiments are not limited to the examples described above but may vary within the scope of the claims.

## Claims

1. An apparatus comprising:
at least one processor and at least one memory including a computer program code, the at least one memory and the computer program code configured to, with the at least one processor, cause the apparatus at least to:
define a need for frequency resources for communications (202);
obtain, from at least one other node, information indicating at least one releasable frequency resource and at least one rule associated with the at least one releasable frequency resource the at least one rule defining a reallocation procedure (204);
compare the need for frequency resources with currently allocated frequency resources (206);
**characterised in that**
if the need for the frequency resources for the communications is not met,
select at least one resource from the at least one releasable frequency resource according to the at least one rule (208);
wherein the at least one rule comprises at least one of: prioritizing reallocation between nodes participating in the resource reallocation procedure, wherein the node having the largest difference between the need for frequency resources and the currently allocated frequency resources would be selected before other nodes for frequency resource reallocation, number of resources selectable at one time, characterizing the service or traffic demand the resource is selectable for, timer defining a pause between selections and information on the number of selection rounds or stages among nodes participating in the resource reallocation procedure.

2. The apparatus of claim 1, further comprising causing the apparatus to:
define an initial allocation of frequency resources prior to defining the need for frequency resources.

3. The apparatus of claim 1 or 2, further comprising causing the apparatus to:
obtain timing information for at least one of: defining the duration for the obtaining the information indicating the at least one releasable frequency resource and the at least one rule, comparing the need for frequency resources with currently allocated frequency resources and selecting the at least one resource; and
carry out the obtaining, the comparing and the selecting according to the obtained timing information.

4. The apparatus of claim 3, wherein the timing information is in the form of stages and duration of each stage.

5. The apparatus of any of preceding claim, wherein the obtaining information indicating at least one releasable frequency resource and at least one rule is carried out by controlling listening to broadcasting.

6. The apparatus of any preceding claim, further comprising causing the apparatus to:
if the at least one other node comprises at least one node belonging to a network of another operator,
carry out the selecting the at least one resource from the at least one releasable frequency resource including also the releasable frequency resources of the at least one node belonging to the network of another operator into the selection or using the releasable frequency resources of the at least one node belonging to the network of another operator exclusively.

7. The apparatus of any preceding claim, further comprising causing the apparatus to:
inform an amount of a need for additional frequency resources.

8. The apparatus of any preceding claim, further comprising causing the apparatus to:
obtain information on a need for additional frequency resources from at least one other node, and
use the information in selecting the at least one resource from the at least one releasable frequency resource according to the at least one rule.

9. A method comprising:
defining a need for frequency resources for communications (202);
obtaining, from at least one other node, information indicating at least one releasable frequency resource and at least one rule associated with the at least one releasable frequency resource the at least one rule defining a reallocation procedure (204);
comparing the need for frequency resources with currently allocated frequency resources (206);
**characterised in that**
if the need for the frequency resources for the communications is not met,
selecting at least one resource from the at least one releasable frequency resource according to the at least one rule;
wherein the at least one rule comprises at least one of: prioritizing reallocation between nodes participating in the resource reallocation procedure, wherein the node having the largest difference between the need for frequency resources and the currently allocated frequency resources would be selected before other nodes for frequency resource reallocation, number of resources selectable at one time, characterizing the service or traffic demand the resource is selectable for, timer defining a pause between selections and information on the number of selection rounds or stages among nodes participating in the resource reallocation procedure.

10. The method of claim 9, further comprising:
obtaining timing information for at least one of: defining the duration for the obtaining the information indicating the at least one releasable frequency resource and the at least one rule, comparing the need for frequency resources with currently allocated frequency resources and selecting the at least one resource; and
carrying out the obtaining, the comparing and the selecting according to the obtained timing information.

11. The method of claim 9 or 10, wherein the obtaining information indicating at least one releasable frequency resource and at least one rule is carried out by controlling listening to broadcasting.

12. The method of any preceding claim 9 to 11, further comprising:
if the at least one other node comprises at least one node belonging to a network of another operator,
carrying out the selecting the at least one resource from the at least one releasable frequency resource including also the releasable frequency resources of the at least one node belonging to the network of another operator into the selection or using the releasable frequency resources of the at least one node belonging to the network of another operator exclusively.

13. The method of any preceding claim 9 to 12, further comprising:
informing an amount of a need for additional frequency resources.

14. The method of any preceding claim 9 to 13, further comprising:
obtaining information on a need for additional frequency resources from at least one other node, and
using the information in selecting the at least one resource from the at least one releasable frequency resource according to the at least one rule.

15. A computer program product for a computer, comprising software code portions for performing the steps of any of claims 9 to 14, when said product is run on the computer.

## Patentansprüche

1. Vorrichtung, umfassend:
mindestens einen Prozessor und mindestens einen Speicher, der einen Computerprogrammcode beinhaltet, wobei der mindestens eine Speicher und der Computerprogrammcode dafür ausgelegt sind, mit dem mindestens einen Prozessor die Vorrichtung mindestens zu Folgendem zu veranlassen:
Definieren eines Bedarfs an Frequenzressourcen für Kommunikation (202);
Erhalten, von mindestens einem weiteren Knoten, von Informationen, die mindestens eine freisetzbare Frequenzressource und mindestens eine Regel, die der mindestens einen freisetzbaren Frequenzressource zugeordnet ist, angeben, wobei die mindestens eine Regel ein Neuzuweisungsverfahren (204) definiert;
Vergleichen des Bedarfs an Frequenzressourcen mit den derzeit zugewiesenen Frequenzressourcen (206);
**dadurch gekennzeichnet, dass**
wenn der Bedarf an den Frequenzressourcen für die Kommunikation nicht gedeckt ist,
Auswählen mindestens einer Ressource aus der mindestens einen freisetzbaren Frequenzressource gemäß der mindestens einen Regel (208);
wobei die mindestens eine Regel mindestens eines der Folgenden umfasst: Priorisieren der Neuzuweisung zwischen Knoten, die am Verfahren der Ressourcenneuzuweisung teilnehmen, wobei der Knoten mit dem größten Unterschied zwischen dem Bedarf an Frequenzressourcen und den aktuell zugewiesenen Frequenzressourcen vor anderen Knoten für Neuzuweisung von Frequenzressourcen, Anzahl der gleichzeitig wählbaren Ressourcen, Charakterisieren des Dienst- oder Verkehrsbedarfs, für den die Ressource wählbar ist, Zeitgeber, der eine Pause zwischen den Auswahlvorgängen definiert und Informationen über die Anzahl der Auswahlrunden oder Phasen zwischen Knoten, die am Verfahren der Ressourcenneuzuweisung teilnehmen, ausgewählt würde.

2. Vorrichtung nach Anspruch 1, ferner umfassend, die Vorrichtung zu Folgendem zu veranlassen:
Definieren einer anfänglichen Zuweisung von Frequenzressourcen, bevor der Bedarf an Frequenzressourcen definiert wird.

3. Vorrichtung nach Anspruch 1 oder 2, ferner umfassend, die Vorrichtung zu Folgendem zu veranlassen:
Erhalten von Zeitinformationen für mindestens eines der Folgenden: Definieren der Dauer für den Erhalt der Informationen, die die mindestens eine freisetzbare Frequenzressource und die mindestens eine Regel angeben, Vergleichen des Bedarfs an Frequenzressourcen mit den derzeit zugewiesenen Frequenzressourcen und Auswählen der mindestens einen Ressource; und
Durchführen des Erhaltens, des Vergleichen und des Auswählens gemäß den erhaltenen Zeitinformationen.

4. Vorrichtung nach Anspruch 3, wobei die Zeitinformationen in Form von Phasen und Dauer jeder Phase vorliegen.

5. Vorrichtung nach einem der vorhergehenden Ansprüche, wobei das Erhalten von Informationen, die mindestens eine freisetzbare Frequenzressource und mindestens eine Regel angeben, durch Steuern des Empfangens von Ausstrahlungen durchgeführt wird.

6. Vorrichtung nach einem der vorhergehenden Ansprüche, ferner umfassend, die Vorrichtung zu Folgendem zu veranlassen:
wenn der mindestens eine andere Knoten mindestens einen Knoten umfasst, der zu einem Netzwerk eines anderen Betreibers gehört,
Durchführen des Auswählens der mindestens einen Ressource aus der mindestens einen freisetzbaren Frequenzressource, wobei auch die freisetzbaren Frequenzressourcen des mindestens einen Knotens, der zum Netzwerk eines anderen Betreibers gehört, in die Auswahl einbezogen werden, oder das ausschließliche Verwenden der freisetzbaren Frequenzressourcen des mindestens einen Knotens, der zum Netzwerk eines anderen Betreibers gehört.

7. Vorrichtung nach einem der vorhergehenden Ansprüche, ferner umfassend, die Vorrichtung zu Folgendem zu veranlassen:
Mitteilen einer Menge eines Bedarfs an zusätzlichen Frequenzressourcen.

8. Vorrichtung nach einem der vorhergehenden Ansprüche, ferner umfassend, die Vorrichtung zu Folgendem zu veranlassen:
Erhalten von Informationen über den Bedarf an zusätzlichen Frequenzressourcen von mindestens einem anderen Knoten, und
Verwenden der Informationen beim Auswählen der mindestens einen Ressource aus der mindestens einen freisetzbaren Frequenzressource gemäß der mindestens einen Regel.

9. Verfahren, umfassend:
Definitieren eines Bedarfs an Frequenzressourcen für die Kommunikation (202);
Erhalten, von mindestens einem weiteren Knoten, von Informationen, die mindestens eine freisetzbare Frequenzressource und mindestens eine Regel, die der mindestens einen freisetzbaren Frequenzressource zugeordnet ist, angeben, wobei die mindestens eine Regel ein Neuzuweisungsverfahren (204) definiert;
Vergleichen des Bedarfs an Frequenzressourcen mit den derzeit zugewiesenen Frequenzressourcen (206);
**dadurch gekennzeichnet, dass**
wenn der Bedarf an den Frequenzressourcen für die Kommunikation nicht gedeckt ist,
Auswählen mindestens einer Ressource aus der mindestens einen freisetzbaren Frequenzressource gemäß der mindestens einen Regel;
wobei die mindestens eine Regel mindestens eines der Folgenden umfasst: Priorisieren der Neuzuweisung zwischen Knoten, die am Verfahren der Ressourcenneuzuweisung teilnehmen, wobei der Knoten mit dem größten Unterschied zwischen dem Bedarf an Frequenzressourcen und den aktuell zugewiesenen Frequenzressourcen vor anderen Knoten für Neuzuweisung von Frequenzressourcen, Anzahl der gleichzeitig wählbaren Ressourcen, Charakterisieren des Dienst- oder Verkehrsbedarfs, für den die Ressource wählbar ist, Zeitgeber, der eine Pause zwischen den Auswahlvorgängen definiert und Informationen über die Anzahl der Auswahlrunden oder Phasen zwischen Knoten, die am Verfahren der Ressourcenneuzuweisung teilnehmen, ausgewählt würde.

10. Verfahren nach Anspruch 9, ferner umfassend:
Erhalten von Zeitinformationen für mindestens eines der Folgenden: Definieren der Dauer für den Erhalt der Informationen, die die mindestens eine freisetzbare Frequenzressource und die mindestens eine Regel angeben, Vergleichen des Bedarfs an Frequenzressourcen mit den derzeit zugewiesenen Frequenzressourcen und Auswählen der mindestens einen Ressource; und
Durchführen des Erhaltens, des Vergleichen und des Auswählens gemäß den erhaltenen Zeitinformationen.

11. Verfahren nach Anspruch 9 oder 10, wobei das Erhalten von Informationen, die mindestens eine freisetzbare Frequenzressource und mindestens eine Regel angeben, durch Steuern des Empfangens von Ausstrahlungen durchgeführt wird.

12. Verfahren nach einem der vorhergehenden Ansprüche 9 bis 11, ferner umfassend:
wenn der mindestens eine andere Knoten mindestens einen Knoten umfasst, der zu einem Netzwerk eines anderen Betreibers gehört,
Durchführen des Auswählens der mindestens einen Ressource aus der mindestens einen freisetzbaren Frequenzressource, wobei auch die freisetzbaren Frequenzressourcen des mindestens einen Knotens, der zum Netzwerk eines anderen Betreibers gehört, in die Auswahl einbezogen werden, oder das ausschließliche Verwenden der freisetzbaren Frequenzressourcen des mindestens einen Knotens, der zum Netzwerk eines anderen Betreibers gehört.

13. Verfahren nach einem der vorhergehenden Ansprüche 9 bis 12, ferner umfassend:
Mitteilen einer Menge eines Bedarfs an zusätzlichen Frequenzressourcen.

14. Verfahren nach einem der vorhergehenden Ansprüche 9 bis 13, ferner umfassend:
Erhalten von Informationen über den Bedarf an zusätzlichen Frequenzressourcen von mindestens einem anderen Knoten, und
Verwenden der Informationen beim Auswählen der mindestens einen Ressource aus der mindestens einen freisetzbaren Frequenzressource gemäß der mindestens einen Regel.

15. Computerprogrammprodukt für einen Computer, umfassend Softwarecodeabschnitte zum Ausführen der Schritte nach einem der Ansprüche 9 bis 14, wenn das Produkt auf dem Computer ausgeführt wird.

## Revendications

1. Appareil comprenant :
au moins un processeur et au moins une mémoire incluant un code de programme informatique, l'au moins une mémoire et le code de programme informatique étant configurés pour, à l'aide de l'au moins un processeur, amener l'appareil à au moins :
définir un besoin pour des ressources en fréquence pour des communications (202) ;
obtenir, à partir d'au moins un autre noeud, des informations indiquant au moins une ressource en fréquence libérable et au moins une règle associée à l'au moins une ressource en fréquence libérable, l'au moins une règle définissant une procédure de ré-attribution (204) ;
comparer le besoin pour des ressources en fréquence avec des ressources en fréquence attribuées actuellement (206) ;
**caractérisé en ce que**
si le besoin pour les ressources en fréquence pour les communications n'est pas satisfait,
sélectionner au moins une ressource parmi l'au moins une ressource en fréquence libérable en fonction de l'au moins une règle (208) ;
dans lequel l'au moins une règle comprend au moins une action parmi : la priorisation de la ré-attribution entre des noeuds participant à la procédure de ré-attribution de ressources, où le noeud ayant la plus grande différence entre le besoin pour des ressources en fréquence et les ressources en fréquence attribuées actuellement serait sélectionné avant d'autres noeuds pour la ré-attribution de ressources en fréquence, un nombre de ressources pouvant être sélectionnées à la fois, la caractérisation de la demande de service ou de trafic pour laquelle la ressource peut être sélectionnée, une minuterie définissant une pause entre des sélections et des informations au sujet du nombre de sessions ou d'étapes de sélection parmi des noeuds participant à la procédure de ré-attribution de ressources.

2. Appareil de la revendication 1, comprenant en outre le fait d'amener l'appareil à :
définir une attribution initiale de ressources en fréquence avant de définir le besoin pour des ressources en fréquence.

3. Appareil de la revendication 1 ou 2, comprenant en outre le fait d'amener l'appareil à :
obtenir des informations de synchronisation pour au moins une action parmi : la définition de la durée pour l'obtention des informations indiquant l'au moins une ressource en fréquence libérable et l'au moins une règle, la comparaison du besoin pour des ressources en fréquence avec des ressources en fréquence attribuées actuellement et la sélection de l'au moins une ressource ; et
exécuter l'obtention, la comparaison et la sélection en fonction des informations de synchronisation obtenues.

4. Appareil de la revendication 3, dans lequel les informations de synchronisation se présentent sous la forme d'étapes et de durée de chaque étape.

5. Appareil de n'importe quelle revendication précédente, dans lequel l'obtention d'informations indiquant au moins une ressource en fréquence libérable et au moins une règle est réalisée grâce au contrôle de l'écoute d'une diffusion.

6. Appareil de n'importe quelle revendication précédente, comprenant en outre le fait d'amener l'appareil à :
si l'au moins un autre noeud comprend au moins un noeud appartenant à un réseau d'un autre opérateur,
réaliser la sélection de l'au moins une ressource parmi l'au moins une ressource en fréquence libérable incluant également les ressources en fréquence libérables de l'au moins un noeud appartenant au réseau d'un autre opérateur dans la sélection ou l'utilisation des ressources en fréquence libérables de l'au moins un noeud appartenant au réseau d'un autre opérateur de manière exclusive.

7. Appareil de n'importe quelle revendication précédente, comprenant en outre le fait d'amener l'appareil à :
informer d'une quantité d'un besoin pour des ressources en fréquence additionnelles.

8. Appareil de n'importe quelle revendication précédente, comprenant en outre le fait d'amener l'appareil à :
obtenir des informations au sujet d'un besoin pour des ressources en fréquence additionnelles à partir d'au moins un autre noeud, et
utiliser les informations dans la sélection de l'au moins une ressource parmi l'au moins une ressource en fréquence libérable en fonction de l'au moins une règle.

9. Procédé comprenant :
le fait de définir un besoin pour des ressources en fréquence pour des communications (202) ;
le fait d'obtenir, à partir d'au moins un autre noeud, des informations indiquant au moins une ressource en fréquence libérable et au moins une règle associée à l'au moins une ressource en fréquence libérable, l'au moins une règle définissant une procédure de ré-attribution (204) ;
le fait de comparer le besoin pour des ressources en fréquence avec des ressources en fréquence attribuées actuellement (206) ;
**caractérisé en ce que**
si le besoin pour les ressources en fréquence pour les communications n'est pas satisfait,
sélectionner au moins une ressource parmi l'au moins une ressource en fréquence libérable en fonction de l'au moins une règle ;
dans lequel l'au moins une règle comprend au moins une action parmi : la priorisation de la ré-attribution entre des noeuds participant à la procédure de ré-attribution de ressources, où le noeud ayant la plus grande différence entre le besoin pour des ressources en fréquence et les ressources en fréquence attribuées actuellement serait sélectionné avant d'autres noeuds pour la ré-attribution de ressources en fréquence, un nombre de ressources pouvant être sélectionnées à la fois, la caractérisation de la demande de service ou de trafic pour laquelle la ressource peut être sélectionnée, une minuterie définissant une pause entre des sélections et des informations au sujet du nombre de sessions ou d'étapes de sélection parmi des noeuds participant à la procédure de ré-attribution de ressources.

10. Procédé de la revendication 9, comprenant en outre :
le fait d'obtenir des informations de synchronisation pour au moins une action parmi : la définition de la durée pour l'obtention des informations indiquant l'au moins une ressource en fréquence libérable et l'au moins une règle, la comparaison du besoin pour des ressources en fréquence avec des ressources en fréquence attribuées actuellement et la sélection de l'au moins une ressource ; et
le fait d'exécuter l'obtention, la comparaison et la sélection en fonction des informations de synchronisation obtenues.

11. Procédé de la revendication 9 ou 10, dans lequel l'obtention d'informations indiquant au moins une ressource en fréquence libérable et au moins une règle est réalisée grâce au contrôle de l'écoute d'une diffusion.

12. Procédé de n'importe quelle revendication 9 à 11, comprenant en outre :
si l'au moins un autre noeud comprend au moins un noeud appartenant à un réseau d'un autre opérateur,
le fait de réaliser la sélection de l'au moins une ressource parmi l'au moins une ressource en fréquence libérable incluant également les ressources en fréquence libérables de l'au moins un noeud appartenant au réseau d'un autre opérateur dans la sélection ou l'utilisation des ressources en fréquence libérables de l'au moins un noeud appartenant au réseau d'un autre opérateur de manière exclusive.

13. Procédé de n'importe quelle revendication 9 à 12, comprenant en outre :
le fait d'informer d'une quantité d'un besoin pour des ressources en fréquence additionnelles.

14. Procédé de n'importe quelle revendication 9 à 13, comprenant en outre :
le fait d'obtenir des informations au sujet d'un besoin pour des ressources en fréquence additionnelles à partir d'au moins un autre noeud, et
le fait d'utiliser les informations dans la sélection de l'au moins une ressource parmi l'au moins une ressource en fréquence libérable en fonction de l'au moins une règle.

15. Produit à programme informatique pour un ordinateur, comprenant des portions de code logiciel pour réaliser les étapes de l'une quelconque des revendications 9 à 14, lorsque ledit produit est exécuté sur l'ordinateur.
